**Europäisches Patentamt**

**European Patent Office**

**Office européen des brevets**

(19)

(11) Veröffentlichungsnummer: **0 029 215**
**B1**

(12) **EUROPÄISCHE PATENTSCHRIFT**

(45) Veröffentlichungstag der Patentschrift:
**12.10.83**

(51) Int. Cl.³: **G 11 B 5/09,** H 04 L 1/10

(21) Anmeldenummer: **80106988.1**

(22) Anmeldetag: **12.11.80**

(54) Datenübertragungseinrichtung mit Pufferspeicher und Einrichtungen zur Sicherung der Daten.

(30) Priorität: **15.11.79 DE 2946223**

(43) Veröffentlichungstag der Anmeldung:
**27.05.81 Patentblatt 81/21**

(45) Bekanntmachung des Hinweises auf die Patenterteilung:
**12.10.83 Patentblatt 83/41**

(84) Benannte Vertragsstaaten:
**AT BE CH FR GB IT LI LU NL SE**

(56) Entgegenhaltungen:
**US-A-3 573 728**

**IBM TECHNICAL DISCLOSURE BULLETIN, Band 15, Nr.
9, Februar 1973, New York, US, E.W. GLICK: «Isolation
of buffer to backing storage errors with a swapping buffer
replacement algorithm», Seiten 2772-2773**

**IBM TECHNICAL DISCLOSURE BULLETIN, Band 13, Nr.
1, Juni 1970, New York, US, P. HODGES: «Virtual memory method for flagging recorded information», Seiten
207-208**

**IBM TECHNICAL DISCLOSURE BULLETIN, Band 12, Nr.
10, März 1970, New York, US, G.M. ZOOK: «ECC and
parity domain conversion checking», Seiten 1647-1649**

(73) Patentinhaber: **SIEMENS AKTIENGESELLSCHAFT,
Berlin und München Wittelsbacherplatz 2,
D-8000 München 2 (DE)**

(72) Erfinder: **Robert, Karl-Heinz, Ing. grad.,
Richard-Wagner-Strasse 41 a, D-8023 Pullach (DE)**

**NEUES AUS DER TECHNIK, Nr. 3, 15. Juni 1978, Würzburg, DE, «Anpassungseinheit für einen seriellen Speicher», Seite 1**

Datenübertragungseinrichtung mit Pufferspeicher und Einrichtungen zur Sicherung der Daten

Die Erfindung betrifft eine Datenübertragungseinrichtung zur Kopplung zweier Einrichtungen für die Übertragung von Daten in der einen oder anderen Richtung, wobei die Daten wenigstens einer Einrichtung in Seriendarstellung angeboten bzw. übernommen werden, mit einem Pufferspeicher zur Zwischenspeicherung der Daten und mit einer Einrichtung zur Sicherung der Daten durch Sicherungszeichen für die Überwachung der seriell arbeitenden Übertragungswege. Derartige Datenübertragungseinrichtungen sind allgemein bekannt, z.B. durch «neues aus der Technik», Nr. 3, 15. Juni 1978.

Bei der Übertragung und Speicherung von Daten in Form von Signalen entstehen gelegentlich Verfälschungen oder Fehler. Es ist daher allgemein üblich, die Daten durch Hinzufügung von Sicherungsinformationen oder -zeichen zu sichern, die das Erkennen von aufgetretenen Fehlern und ggf. sogar eine Fehlerkorrektur ermöglichen. Die allgemein geläufigsten Verfahren zur Fehlererkennung sind die Paritätskontrolle und die zyklische Codesicherung (CRC). Weiterhin gibt es selbstkorrigierende Codes (EEC), die neben der Fehlererkennung eine Korrektur ermöglichen.

Beim Einspeichern oder Aussenden von Daten werden die Sicherungszeichen gebildet und den jeweils zugehörigen Daten hinzugefügt. Beim nachfolgenden Ausspeichern oder Empfangen der gesicherten Daten werden nach dem jeweils gleichen Verfahren die Sicherungszeichen erneut gebildet und mit den mit den Daten mitgelieferten Sicherungszeichen verglichen. Besteht dabei keine Übereinstimmung, so liegt ein Lese- bzw. Übertragungsfehler vor. Der Lese- bzw. Übertragungsvorgang ist dann zu wiederholen bzw. die Daten sind bei Verwendung selbstkorrigierender Codes zu korrigieren.

Bei Anordnungen der eingangs genannten Art werden die Daten bisher auf zweierlei Art gesichert, nämlich bei der Speicherung im Pufferspeicher durch Paritätsbits und für die Übertragung über den seriell arbeitenden Datenweg, insbesondere wenn es sich um den Zugang zu einem Plattenspeicher handelt, durch zyklische oder selbstkorrigierende Codes.

Aufgabe der Erfingung ist es, den Sicherungsaufwand für derartige Anordnungen zu verringern und die Wirksamkeit der Sicherung teilweise zu erhöhen. Dies wird gemäss der Erfindung dadurch erreicht, dass die Sicherungseinrichtung auch für die Überwachung des Pufferspeichers verwendet wird und die dem Pufferspeicher unabhängig von der Übertragungsrichtung zugeführten und entnommenen Daten jeweils auch der Sicherungseinrichtung zugeführt werden und dass bei einer Eingabe von Daten in den Pufferspeicher die zugehörigen Sicherungszeichen ebenfalls im Pufferspeicher abgespeichert werden, während bei einer Ausgabe aus dem Pufferspeicher die abgespeicherten Sicherungszeichen mit den jeweils neu ermittelten Sicherungszeichen verglichen werden, wobei bei Entgegennahme von Daten in serieller Darstellung für den Pufferspeicher von der Sicherungseinrichtung zunächst die für den Vergleich mit den auf dem seriellen Übertragungsweg mitgeführten Sicherungszeichen benötigten Sicherungszeichen ermittelt werden und bei Übereinstimmung in den Pufferspeicher die zugehörigen Sicherungszeichen eingespeichert werden, während bei einer Weiterleitung von Daten aus dem Pufferspeicher in serieller Darstellung die von der Sicherungseinrichtung neu ermittelten Sicherungszeichen für den Vergleich mit den im Pufferspeicher abgespeicherten Sicherungszeichen verwendet werden.

Demnach wird auf die gesonderte Sicherung des Pufferspeichers durch Paritätsbits verzichtet und statt dessen die den einen seriellen Übertragungsweg sichernde Einrichtung, die im allgemeinen mit einem zyklischen oder selbstkorrigierenden Code arbeitet, für die Sicherung des Pufferspeichers mit ausgenutzt. Dadurch wird der nicht unerhebliche Hardwareaufwand für die Pufferspeichersicherung eingespart, und zum anderen bewirkt das höherwertige Sicherungsverfahren für den Pufferspeicher eine höhere Datensicherheit.

Infolge der doppelten Ausnutzung der Sicherungseinrichtung sowohl für den Pufferspeicher als auch für den einen seriellen Übertragungsweg kann das beim Aussenden bzw. beim Empfangen über den seriellen Übertragungsweg jeweils neu gebildete Zeichen gleichfalls für die Sicherung des Pufferspeichers herangezogen werden. Als Sicherungscode kann entweder ein zyklischer oder aber auch ein selbstkorrigierender Code verwendet werden. Bei einer sehr häufigen Ausführungsform, bei der die Daten von einer der zu koppelnden beiden Einrichtungen in Paralleldarstellung angeboten bzw. übernommen werden, die Zwischenspeicherung im Pufferspeicher ebenfalls in Paralleldarstellung erfolgt und ein Serien-/Parallelumsetzer vorgesehen ist, erfolgt die Ansteuerung der Sicherungseinrichtung durch die Daten in Paralleldarstellung und die Übergabe der abzuspeichernden Sicherungszeichen an den Pufferspeicher jeweils über den Serien/Parallelumsetzer. Auf diese Weise wird eine gleichartige Ansteuerung von Sicherungseinrichtung und Pufferspeicher sowohl durch die Daten als auch durch Sicherungszeichen sichergestellt. Auf eine empfangsseitige Sicherungsprüfung bei Entgegennahme von Daten in Paralleldarstellung und auf die Bereitstellung von Sicherungszeichen für den Übertragungsweg zur die Daten in Paralleldarstellung aufnehmenden Enrichtung kann dabei verzichtet werden, insbesondere wenn diese Einrichtung ein Prozessor ist.

Weitere Einzelheiten der Erfindung seien nachfolgend anhand zweier in der Zeichnung dargestellter Ausführungsbeispiele näher erläutert. Im einzelnen zeigen:

Fig. 1 eine Datenübertragungseinrichtung gemäss der Erfindung zur Kopplung zweier seriell arbeitender Einrichtungen und

Fig. 2 eine Datenübertragungseinrichtung gemäss der Erfindung zur Kopplung einer parallel arbeitenden Enrichtung mit einer seriell arbeitenden Einrichtung.

In beiden Figuren sind die miteinander zu koppelnden Einrichtungen mit A und B, der Pufferspeicher mit PSP und die Sicherungseinrichtung mit SE bezeichnet. Hinzu kommen Auswahlschalter MU1 bis MU4 bzw. MU1 bis MU5 zur Durchschaltung der einzelnen Datenwege abhängig von Steuertakten einer Ablaufsteuerung AT-ST.

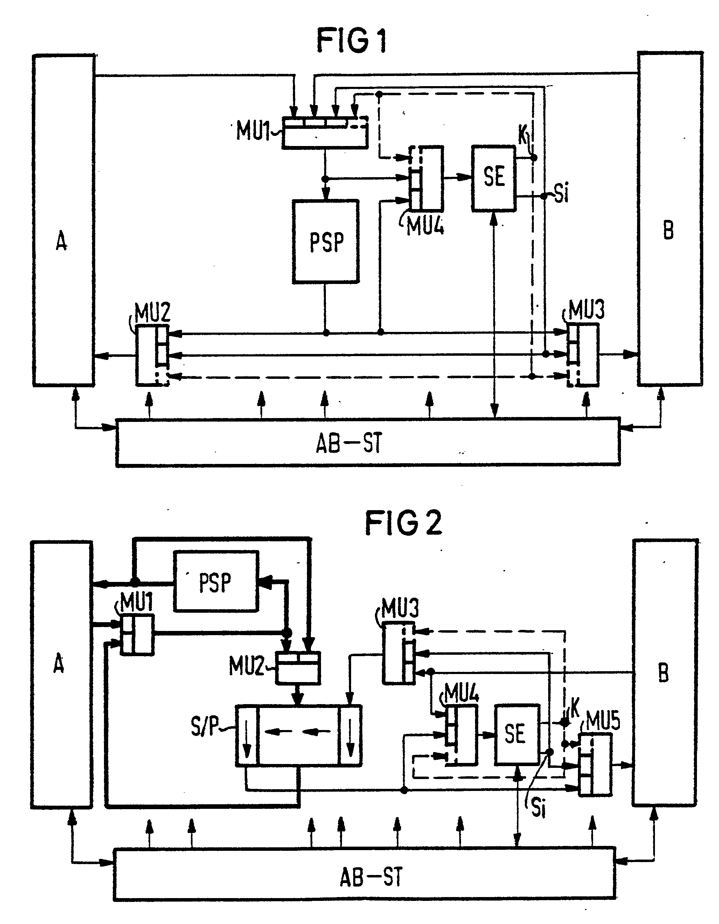

Bei der Anordnung nach Fig. 1 arbeiten beide Einrichtungen A und B seriell. Von der Einrichtung A gelieferte Daten werden seriell über den Auswahlschalter MU1 in den Pufferspeicher PSP eingegeben und parallel dazu über den Auswahlschalter MU4 der Sicherungseinrichtung SE zugeleitet. Letztere ermittelt, z.B. byte- oder wortweise, das zugehörige Sicherungszeichen Si, das mit dem mitgeführten Sicherungszeichen verglichen und bei Übereinstimmung über den Auswahlschalter MU1 im Anschluss an jedes Datenbyte oder -wort ebenfalls in den Pufferspeicher PSP eingespeichert wird. Bei Nichtübereinstimmung erfolgt dagegen in an sich bekannter Weise ein Fehleralarm der die Ablaufsteuerung AB-ST zu einer Wiederholungsanforderung veranlasst.

Sind anschliessend die zwischengespeicherten Daten aus dem Pufferspeicher PSP an die Einrichtung B, z.B. einen Plattenspeicher, weiterzuleiten, so werden zunächst die ausgespeicherten Daten über den Auswahlschalter MU3 zur Einrichtung B gesendet. Gleichzeitig werden die Daten und die zugehörigen Sicherungszeichen aus dem Pufferspeicher über den Auswahlschalter MU4 der Sicherungseinrichtung SE zugeleitet. Diese bildet erneut das Sicherungszeichen SI und vergleicht dieses mit dem ausgespeicherten. Stimmen beide Sicherungszeichen überein, so wird das neu gebildete Sicherungszeichen über den Auswahlschalter MU3 ebenfalls an die Einrichtung B zur Ergänzung der ausgesandten Daten geschickt.

Bei Nichtübereinstimmung wird dagegen ein Fehleralarm ausgelöst.

Bei umgekehrter Übertragungseinrichtung von der Einrichtung B zur Einrichtung A wiederholt sich das gleiche Spiel wie bei der Übertragung von der Einrichtung A zur Einrichtung B. Nur wird jetzt statt des Auswahlschalters MU3 der Auswahlschalter MU2 zur Einrichtung A betätigt.

Bei den bisher beschriebenen Arbeitsabläufen ist unterstellt, dass die Sicherungseinrichtung SE mit einem zyklischen Code arbeitet und die jeweils neu gebildeten Sicherungszeichen Si den Daten angehängt werden. Stattdessen können auch die jeweils angelieferten Sicherungszeichen zusammen mit den Daten weitergeleitet und die jeweils neu gebildeten Sicherungszeichen allein für den Vergleich verwendet werden. Weiterhin kann statt einer solchen Sicherungseinrichtung auch eine Einrichtung mit Sicherung durch einen selbstkorrigierenden Code und Korrektur von Fehlern vorgesehen werden. Dies ist durch die gestrichelten Linien angedeutet. Die bisher beschriebene Arbeitsweise der Anordnung wird dadurch nur insofern beeinflusst, dass im Fehlerfalle nach Aussendung bzw. Einspeicherung der Daten und des Sicherungszeichens Si korrigierte Daten K über die gestrichelten Leitungen nachgesendet werden und das Sicherungszeichen Si durch Rückführung der korrigierten Daten K über den Auswahlschalter MU1 und MU4 auf den Eingang der Sicherungseinrichtung SE nochmals gebildet und ebenfalls nachgesendet wird.

Fig. 2 zeigt den Aufbau einer Datenübertragungseinrichtung gemäss der Erfindung für die Kopplung einer parallel arbeitenden Einrichtung A, z.B. einen Datenprozessor, mit einer seriell arbeitenden Einrichtung B, z.B. einem Plattenspeicher. Die Daten werden daher von der Einrichtung A in Paralleldarstellung angeboten und über den Auswahlschalter MU1 in dieser Form im Pufferspeicher PSP abgespeichert. Gleichzeitig werden die empfangenen Daten über den Auswahlschalter MU2, den Parallel-/Serienumsetzer S/P und den Auswahlschalter MU4 der Sicherungseinrichtung SE zugeführt, von dieser das Sicherungszeichen Si ermittelt und dies über den Auswahlschalter MU3, den Serien/Parallelumsetzer S/P und den Auswahlschalter MU 1 im Pufferspeicher PSP abgespeichert.

Bei der Weiterleitung an die Einrichtung B werden die im Pufferspeicher PSP gespeicherten Daten über den Auswahlschalter MU2, den Parallel/Serienumsetzer S/P und den Auswahlschalter MU5 an die Einrichtung B abgegeben. Gleichzeitig werden die Daten und die abgespeicherten Sicherungszeichen vom Ausgang des Parallel/Serienumsetzers über den Auswahlschalter MU4 zur Sicherungseinrichtung SE geleitet, das Sicherungszeichen erneut gebildet und mit dem mitgeführten Sicherungszeichen verglichen. Stimmen beide Sicherungszeichen jeweils überein, so wird entweder das neu gebildete oder auch das alte Sicherungszeichen den zur Einrichtung B über den Auswahlschalter MU5 ausgesandten Daten angehängt. Anderenfalls wird bei Ungleichheit in bekannter Weise ein Fehleralarm ausgelöst.

Bei umgekerter Übertragungsrichtung von der Einrichtung B zur Einrichtung A werden die Daten vor Einspeicherung in den Pufferspeicher PSP zunächst über den Auswahlschalter MU3 und den Serienparallelumsetzer S/P geleitet, bevor in Paralleldarstellung über den Auswahlschalter MU1 an den Pufferspeicher PSP übergeben werden. Gleichzeitig werden die Daten und die mitgelieferten Sicherungszeichen über den Auswahlschalter MU4 zur Sicherungseinrichtung SE geleitet, aus den Daten das neue Sicherungszeichen ermittelt und dies mit dem mitgeführten Sicherungszeichen verglichen. Bei Zeichengleichheit wird das Sicherungszeichen über den Auswahlschalter MU3, den Serien/Parallelumsetzer S/P und den Auswahlschalter MU1 an den Pufferspeicher PSP nachgeliefert. Bei der Weiterleitung der so im Pufferspeicher PSP zwischengespeicherten Daten an die Einrichtung A werden die Daten und Sicherungszeichen wiederum wie bei der Einspeicherung in umgekehrter Übertragungsrichtung über den Auswahlschalter MU2, den Parallel/Serienumsetzer S/P und den Auswahlschalter MU4 der Sicherungseinrichtung SE zugeführt und überprüft. Jedoch ist es in diesem Falle nicht erforderlich, auch die Sicherungszeichen zur Einrichtung A zu übertragen, da eine Verfälschung von richtig aus dem Pufferspeicher PSP ausgelesenen Daten bei der Parallelübertragung wesentlich unwahrscheinlicher ist als eine Verfälschung durch den der Sicherungseinrichtung SE vorgeschalteten Parallel/Serienumsetzer S/P. Ebenso kann bei der Übetragung von der Einrichtung A zum Pufferspeicher PSP auf eine zusätzliche Prüfung am Eingang der Datenübertragungseinrichtung verzichtet werden, da hierbei die Übertragung durch die abgehende Partitätskontrolle in der Einrichtung A den Übertragungsweg ausreichend abdeckt.

Auch bei dieser Ausführungsform ist zunächst unterstellt worden, dass die Sicherungseinrichtung SE mit einem zyklischen Code arbeitet und nur der Fehlererkennung dient. Statt dessen kann ebenfalls ein selbstkorrigierender Code verwendet werden, wobei die Sicherungseinrichtung eine Korrektureinrichtung umfasst, die über die gestrichelten Leitungen korrigierte Daten K liefert, die im Fehlerfall, wie anhand von Fig. 1 beschrieben nachgesendet und durch ein erneutes Sicherungszeichen ergänzt werden.

## Patentansprüche

1. Datenübertragungseinrichtung zur Kopplung zweier Einrichtungen (A, B) für die Übertragung von Daten in der einen oder anderen Richtung, wobei die Daten von wenigstens einer Einrichtung in Seriendarstellung angeboten bzw. übernommen werden, mit einem Pufferspeicher (PSP) zur Zwischenspeicherung der Daten und mit einer Einrichtung (SE) zur Sicherung der Daten durch Sicherungszeichen (Si) für die Überwachung der seriell arbeitenden Übertragungswege, dadurch gekennzeichnet, dass die Sicherungseinrichtung (SE) auch für die Überwachung des Pufferspeichers (PSP) verwendet wird und die dem Pufferspeicher (PSP) unabhängig von der Übertragungsrichtung zugeführten und entnommenen Daten jeweils auch der Sicherungseinrichtung (SE) zugeführt werden und dass bei einer Eingabe von Daten in den Pufferspeicher (PSP) die zugehörigen Sicherungszeichen (Si) ebenfalls im Pufferspeicher (PSP) abgespeichert werden, während bei einer Ausgabe aus dem Pufferspeicher (PSP) die abgespeicherten Sicherungszeichen (Si) mit den jeweils neu ermittelten Sicherungszeichen verglichen werden, wobei bei Entgegennahme von Daten in serieller Darstellung für den Pufferspeicher (PSP) von der Sicherungseinrichtung (SE) zunächst die für den Vergleich mit den auf dem seriellen Übertragungsweg mitgeführten Sicherungszeichen benötigten Sicherungszeichen ermittelt werden und bei Übereinstimmung die zugehörigen Sicherungszeichen in der Pufferspeicher (PSP) eingespeichert werden, während bei einer Weiterleitung von Daten aus dem Pufferspeicher (PSP) in serieller Darstellung die von der Sicherungseinrichtung (SE) neu ermittelten Sicherungszeichen (Si) für den Vergleich mit den im Pufferspeicher (PSP) abgespeicherten Sichergungszeichen verwendet werden.

2. Datenübertragungseinrichtung nach Anspruch 1, dadurch gekennzeichnet, dass jeweils die von der Sicherungseinrichtung (SE) neu ermittelten Sicherungszeichen (Si) im Pufferspeicher (PSP) abgespeichert bzw. über den angeschlossenen Übertragungsweg weitergeleitet werden.

3. Datenübertragungseinrichtung nach Anspruch 1 oder 2, dadurch gekennzeichnet, dass für die Sicherungszeichen ein zyklischer Code verwendet wird.

4. Datenübertragungseinrichtung nach einem der Ansprüche 1 bis 3, dadurch gekennzeichnet, dass der Sicherungscode ein selbstkorrigierender Code ist und dass nach jeder Fehlerkorrektur das Sicherungszeichen erneut ermittelt und den korrigierten Daten (K) zugesetzt wird.

5. Datenübertragungseinrichtung nach einem der Ansprüche 1 bis 4, bei der die Daten von einer der zu koppelnden beiden Einrichtungen in Paralleldarstellung angeboten bzw. übernommen werden, die Zwischenspeicherung im Pufferspeicher ebenfalls in Paralleldarstellung erfolgt und ein Parallel/Serienumsetzer vorgesehen ist, dadurch gekennzeichnet, dass die Ansteuerung der Sicherungseinrichtung (SE) durch die Daten in Paralleldarstellung und die Übergabe der abzuspeichernden Sicherungszeichen an den Pufferspeicher (PSP) jeweils über den Parallel/Serienumsetzer (S/P) erfolgt.

## Claims

1. Data transmission device for coupling two devices (A, B) for the transmission of data in the one or other direction, where the items of data are offered or accepted in series representation by at least one device, having a buffer store (PSP) which serves to store intermediately the data and having a device (SE) which serves to safeguard the data by means of safeguarding signals (Si) for the monitoring of the transmission paths operating in series, characterised in that the safeguarding device (SE) is additionally used to monitor the buffer store (PSP), and the items of data which are supplied to and withdrawn from the buffer store (PSP) independently of the direction of transmission are additionally fed to the safeguarding device (SE), and that when data is input into the buffer store (PSP) the associated safeguarding signals (Si) are likewise stored in the buffer store (PSP), whereas when output takes place from the buffer store (PSP) the stored safeguarding signals (Si) are compared with the newly determined safeguarding signals, wherein when data is accepted in serial representation for the buffer store (PSP), the safeguarding device (SE) firstly determines the safeguarding signals which are required for comparison with the safeguarding signals which have been carried on the series transmission path and in the event of identity inputs the associated safeguarding signals into the buffer store (PSP), whereas when data is forwarded from the buffer store (PSP) in series representation, the safeguarding signals (Si) which have been newly determined by the safeguarding device (SE) are used for comparison with the safeguarding signals which are stored in the buffer store (PSP).

2. Data transmission device as claimed in claim 1, characterised in that the safeguarding signals (Si) which are newly determined by the safeguarding device (SE) are in each case stored in the buffer store (PSP) or forwarded via the connected transmission path.

3. Data transmission device as claimed in claim 1 or 2, characterised in that a cyclic code is used for the safeguarding signals.

4. Data transmission device as claimed in one of the claims 1 to 3, characterised in that the safeguarding code is a self-correcting code, and following each fault correction the safeguarding signal is re-determined and added to the corrected data (K).

5. Data transmission device as claimed in one of the claims 1 to 4, wherein the data is offered or accepted in parallel representation by one of the two devices which are to be coupled, the intermediate storage in the buffer store likewise takes place in parallel representation, and a parallel/series converter is provided, characterised in that the safeguarding device (SE) is driven by the data in parallel representation, and the safeguarding signals which are to be stored are transferred to the buffer store (PSP) via the parallel/series converter (S/P).

**Revendications**

1. Installation de transmission de données pour le couplage de deux dispositifs (A, B) pour la transmission de données dans l'une et dans l'autre direction, les données étant offertes ou prises en charge, en présentation sérielle, par au moins un dispositif, avec une mémoire-tampon (PSP) pour la mémorisation temporaire de données et avec un dispositif (SE) pour la protection des données par des signes de protection (Si) en vue de la surveillance de la voie de transmission opérant de manière sérielle, caractérisée par le fait que le dispositif de sécurité (SE) est également utilisé pour la surveillance de la mémoire-tampon (PSP) et les données introduites dans et prélevées de la mémoire-tampon (PSP), indépendamment de la direction de la transmission, sont respectivement appliquées aussi au dispositif de securité (SE), et que lors d'une introduction de données dans la mémoire-tampon (PSP) et des signes de protection (Si) associés sont également mémorisés dans la mémoire-tampon (PSP), alors que lors du prélèvement de la mémoire-tampon (PSP) les signes de protection (Si) mémorisés sont comparés respectivement avec les signes de protection nouvellement déterminés, et que lors de la prise en charge de données en représentation sérielle pour la mémoire-tampon (PSP), les signes de protection qui sont nécessaires pour la comparaison avec les signes de protection entraînés sur la voie de transmission sérielle, étant d'abord déterminés par le dispositif de sécurité (SE) et, en cas de coïncidence, les signes de protection associés étant mémorisés dans la mémoire-tampon (PSP), alors que lors de la transmission de données à partir de la mémoire-tampon (PSP) en représentation sérielle, les signes de protection nouveaux qui ont été déterminés sont utilisés pour la comparaison avec les signes de protection mémorisés dans la mémoire-tampon (PSP).

2. Installation pour la transmission de données selon la revendication 1, caractérisée par le fait che les nouveaux signes de protection (Si) qui ont été déterminés respectivement par le dispositif de protection (SE), sont mémorisés dans la mémoire-tampon (PSP) ou retransmis par la voie de transmission qui est branchée.

3. Installation de transmission de données selon la rivendication 1 ou 2, caractérisée par le fait que l'on utilise, pour les signes de protection, un code cyclique.

4. Installation de transmission de données selon l'une des revendications 1 à 3, caractérisée par le fait que le code de protection est un code à correction automatique et qu'après chaque correction d'erreur le signe de protection est déterminé à nouveau et est ajouté aux données corrigées (K).

5. Installation de transmission de données selon l'une des revendications 1 à 4, dans laquelle les données sont offertes ou prises en charge en présentation parallèle par l'une des deux dispositifs à coupler, la mémorisation intermédiaire dans la mémoire-tampon ayant également lieu en présentation parallèle et un convertisseur parallèle/série étant prévu, caractérisée par le fait que l'attaque du dispositif de protection (SE) a lieu par les données en présentation parallèle et la transmission à la mémoire-tampon (PSP) des signes de protection qui sont à mémoriser a respectivement lieu par l'intermédiaire du convertisseur parallèle/série (S/P).

# FIG 1

# FIG 2